# EUROPÄISCHE PATENTSCHRIFT

(11) **EP 1 222 387 B1**
(45) Veröffentlichungstag und Bekanntmachung des Hinweises auf die Patenterteilung: **16.03.2005**
(21) Anmeldenummer: 00954601.1
(22) Anmeldetag: 08.08.2000
(51) Int. Cl.: F03B 17/06, F03B 3/12, F03B 13/10

(54) **MEERESSTROM-KRAFTWERK**
POWER STATION USING OCEAN CURRENTS
CENTRALE ELECTRIQUE UTILISANT LES COURANTS MARINS

(30) Priorität: 06.10.1999 DE 19948198
(43) Veröffentlichungstag der Anmeldung: 17.07.2002
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2000/007665
(87) Internationale Veröffentlichungsnummer: WO 2001/025627

(56) Entgegenhaltungen:
- EP-A- 0 002 995
- DE-A- 19 748 635
- FR-A- 2 378 957
- FR-A- 2 548 737
- US-A- 4 078 388
- US-A- 5 281 856

## Beschreibung

Die Erfindung betrifft ein Meeresstrom-Kraftwerk. Hierbei handelt es sich nicht nur um ein bekanntes Gezeitenkraftwerk, welches die Energie von Ebbe und Flut ausnutzt, sondern um ein Kraftwerk, welches Meeresströmungen, die über alle Weltmeere ständig gegeben sind, Energie entzieht. Ein solches Meeresstrom-Kraftwerk wird z.B. in der EP 0 002 995 A beschrieben.

Solche Meeresströmungen sind regelmäßig großräumige stationäre Stromsysteme, deren Entstehen sich auf die Schubkraft des Gewindes an der Meeresoberfläche (Driftstrom), innere Druckkräfte (Gradientenstrom) sowie die Erdrotation (Corioliskraft) und die Topografie des Meeresbodens und der Küsten bestimmend zurückführen lassen. Als wichtigste Meeresströmungen seien beispielhaft die Nord- und Südäquatoriatströme, Kuroshio, Ostaustralstrom, Golfstrom, Brasilstrom, Agulhasstrom, Nordpazifischer Strom, Nordatlantischer Strom, Westwinddrift, Kalifornischer Strom, Humboldtstrom, Kanarenstrom, Benguelastrom, Westaustralstrom, äquatoriale Gegenströme, Alaskastrom, Norwegischer Strom, Westspitzbergenstrom, Ostgrönlandstrom, Labradorstrom, Irmingerstrom, Oyashio sowie der Falklandstrom genannt. Neben den bekannten Oberflächenströmungen in den Weltmeeren gibt es ausgeprägt im Atlantischen und Pazifischen Ozean die äquatorialen Unterströme (bis 2,5 m/Sek Fließgeschwindigkeit), die in einer Tiefe von rund 100 m (oder tiefer) unter dem westwärts gerichteten Südäquatoriatstrom direkt auf den Äquator ostwärts fließen.

Die Erfindung schlägt vor, ein Meeresstrom-Kraftwerk auszubilden, welches dem Meeresstrom Strömungsenergie entzieht und die entzogene Energie in elektrische Energie umsetzt. Das erfindungsgemäße Meeresstrom-Wasserkraftwerk wird hierbei unterhalb des Wasserspiegels, beispielsweise mehr als 50 m unterhalb des Wasserspiegels eingesetzt und kann auch dann eine relativ große Leistung zur Verfügung stellen, wenn die Fließgeschwindigkeit des Meeresstroms relativ gering ist, beispielsweise im Bereich von 1,5 m/Sek oder weniger. Dies wird dadurch erreicht, daß das Wasserkraftwerk ein Wasserrad bzw. einen Rotor (Turbine oder Propeller) aufweist, der über einen Durchmesser von beispielsweise 10 m oder mehr, bevorzugt zwischen 30 m und 120 m verfügt.

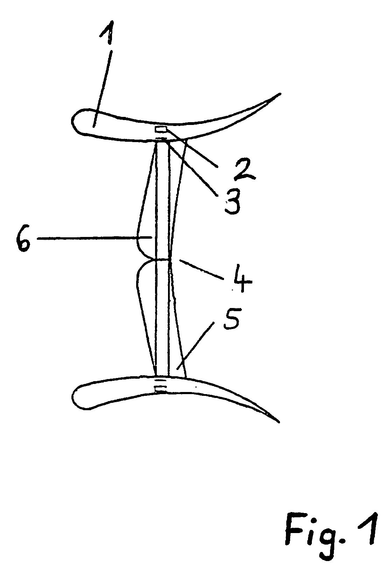

Figur 1 zeigt beispielhaft im Querschnitt ein erfindungsgemäßes Meeresstrom-Wasserkraftwerk. Dieses Kraftwerk weist ein ringförmiges Gehäuse auf, welches über eine sehr hohe Festigkeit verfügt. Gleichzeitig ist das ringförmige Gehäuse als Konzentrator 1 ausgebildet, so daß die Strömungsgeschwindigkeit in den Ring eintretenden Wassers erhöht wird und im zentralen Bereich des Gehäuses ist ein Wasserrad 6 bzw. ein Rotor ausgebildet, welcher sich - von der Strömungsgeschwindigkeit des Wassers angetrieben - dreht und hierbei gleichzeitig einen Generatorläufer 3 eines Generators antreibt. Hierbei ist der Generator nicht mit einer Welle an der Turbine gekoppelt, sondern das Polrad de Generatorläufers 3 ist außen am Wasserrad 6 befestigt. Somit trägt das Wasserrad 6 bzw. trägt der Rotor des Kraftwerks den Generatorläufer 3, welcher von einem Generatorstator 2 im Gehäuse des Wasserkraftwerks umgeben ist. Die auf das Wasserrad wirkenden Kräfte werden von Lagern 4 aufgenommen, die auf einem Tragstern 5 ruhen, welcher den Gehäusering durchsetzt.

Zudem weist der Rotor bzw. das Wasserrad 6 und bevorzugt das Gehäuse des Wasserkraftwerks Hohlräume auf, die geflutet werden können, so daß sich ein Gleichgewicht 4 des Wasserkraftwerks zum Wasser einstellt. Damit ist sichergestellt, daß das Lager des Wasserkraftwerks nur noch den Schub des strömenden Wassers aufnehmen muß.

Die Hohlräume können beim Transport des Wasserkraftwerks zum Standort mit Luft gefüllt werden. Dann kann ein Schiff das Wasserkraftwerk schwimmend zum Standort transportieren. Sobald das Wasserkraftwerk seinen vorgesehenen Standort erreicht hat, werden die Hohlkammern - je nach Bedarf - mit Wasser, vorzugsweise Seewasser, geflutet, damit das Wasserkraftwerk langsam zu Boden sinken kann. Sollte ein Umsetzen des Wasserkraftwerks oder eine Reparatur notwendig sein, kann das Wasser aus den gefluteten Hohlkammern wieder herausgedrückt werden.

Es ist möglich, das Wasserkraftwerk sowohl direkt am Boden zu verankern oder aber in einem gewissen Abstand zum Meeresboden mit entsprechenden am Meeresboden arretierten Ketten oder Seilen oder anderen Aufbauten zu fixieren.

Die von dem Generator erzeugte Energie wird mittels Kabeln abgeführt und direkt in ein Energienetz eingespeist. Auch ist es möglich, mit der von den Meeresstrom-Wasserkraftwerk erzeugten Energie Meerwasserentsalzungsanlagen mit Strom zu versorgen.

Auch wenn Meeresströmungen über relativ geringe Fließgeschwindigkeiten verfügen, kann das folgende Zahlenbeispiel verdeutlichen, daß sehr große Mengen an elektrischer Energie (und eine entsprechende Leistung von mehr als 500 KW) erzeugt werden können, je nachdem, wie groß die Meeresstromgeschwindigkeit ist und wie groß der Wasserrad-Durchmesser des Kraftwerks ausgebildet ist.

So ist es beispielsweise möglich, bei einer Meeresstromgeschwindigkeit von 1,5 m/Sek und einem Wasserrad-Durchmesser von 25 m bereits eine Leistung von 500 KW bereitzustellen. Wird der Durchmesser des Wasserrads auf 80 m erhöht, ist eine Leistung von 5 MW möglich. Bei einem Wasserrad-Durchmesser von 36 m ist noch eine Leistung von 1 MW möglich.

Steigt die Meeresstromgeschwindigkeit an, so steigt der Betrag der elektrischen Leistung in der dritten Potenz hierzu.

Der besondere Vorteil des erfindungsgemäßen Meeresstrom-Kraftwerks besteht darin, daß es dort eingesetzt werden kann, wo praktisch das Kraftwerk selbst nicht die Umwelt stört. Gleichzeitig kann mit dem Meeresstrom-Kraftwerk eine Energiequelle zugängig gemacht werden, welche nahezu unversiegbar ist und deren Verhalten sehr genau vorausberechenbar ist. Trotz der Größe des Meeresstrom-Wasserkraftwerks kann dieses durch das Fluten der Hohlräume bzw. durch das Herauspressen des Wassers aus den Hohlräumen sehr genau in den Meeresströmungen positioniert werden, wo es keinen negativen Einfluß auf die Schiffahrt hat, weil es unterhalb der üblichen Tiefgänge von Seeschiffen liegt.

Es sei angemerkt, daß das erfindungsgemäße Meeresstrom-Kraftwerk auch dazu verwendet werden kann, Ebbe- bzw. Flut-Strömungen, die sich regelmäßig mit einer Tide einstellen, auszunutzen. Hierzu ist es zweckmäßig, daß die Rotorblätter so ausgebildet sind, daß sie Strömungen von beiden Seiten umsetzen können (Rotation in zwei verschiedene Richtungen) oder sich bevorzugt mit Änderung der Strömungsrichtung verdrehen können.

## Patentansprüche

1. Transportables Meeresstrom-Kraftwerk mit einem Gehäuse, welches einen Generator, bestehend aus einem Generatorläufer (3) und einem Generatorstator (2), aufnimmt, wobei der Generator mittels eines Rotors, welcher mit dem Generatorläufer (3) verbunden ist, angetrieben wird,
**dadurch gekennzeichnet, dass** der Rotor des Kraftwerks mindestens ein Rotorblatt (6) aufweist, welches den Generatorläufer (3) des Generators des Kraftwerks trägt, und das Rotorblatt (6) des Kraftwerks wenigstens einen mit Wasser flutbaren Hohlraum aufweist.

2. Meeresstrom-Kraftwerk nach einem der Anspruch 1,
**dadurch gekennzeichnet, dass** das Gehäuse des Kraftwerks wenigstens zum Teil als Konzentrator (1) ausgebildet ist, mittels welchem die Strömungsgeschwindigkeit des in das Kraftwerk eintretenden Wassers vergrößert wird.

3. Meeresstrom-Kraftwerk nach einem der vorherigen Ansprüche,
**dadurch gekennzeichnet, dass** das Gehäuse des Kraftwerkes geschlossene Hohlräume aufweist, welche mit Wasser flutbar sind und aus welchen das Wasser gegebenenfalls wieder ausgedrängt werden kann.

## Claims

1. Transportable sea current power station having a housing which holds a generator, comprising a generator rotor (3) and a generator stator (2), with the generator being driven by means of a rotor which is connected to the generator rotor (3),
**characterized in that** the rotor of the power station has at least one rotor blade (6) which is fitted with the generator rotor (3) of the generator for the power station, and the rotor blade (6) of the power station has at least one cavity which can be flooded with water.

2. Sea current power station according to Claim 1,
**characterized in that** the housing of the power station is at least partially in the form of a concentrator (1), by means of which the flow speed of the water entering the power station is increased.

3. Sea current power station according to one of the preceding claims,
**characterized in that** the housing of the power station has closed cavities which can be flooded with water and from which the water can be forced out again if required.

## Revendications

1. Centrale électrique transportable utilisant les courants marins comprenant un carter qui reçoit un générateur composé d'un induit de générateur (3) et d'un stator de générateur (2), le générateur étant actionné au moyen d'un rotor qui est raccordé à l'induit de générateur (3), **caractérisée en ce que** le rotor de la centrale électrique présente au moins une pale de rotor (6) qui porte l'induit de générateur (3) du générateur de la centrale électrique, la pale de rotor (6) de la centrale électrique présentant au moins une cavité pouvant être remplie avec de l'eau.

2. Centrale électrique utilisant les courants marins selon la revendication 1, **caractérisée en ce que** le carter de la centrale électrique est réalisé au moins en partie sous forme de concentrateur (1) au moyen duquel la vitesse du courant de l'eau entrant dans la centrale électrique est augmentée.

3. Centrale électrique utilisant les courants marins selon l'une quelconque des revendications précédentes, **caractérisée en ce que** le carter de la centrale électrique présente des cavités fermées qui peuvent être remplies avec de l'eau et à partir desquelles l'eau peut être à nouveau expulsée le cas échéant.
